# EUROPÄISCHE PATENTANMELDUNG

(11) **EP 1 662 164 A2**
(43) Veröffentlichungstag der Anmeldung: **31.05.2006**
(21) Anmeldenummer: 05111238.1
(22) Anmeldetag: 24.11.2005
(51) Int. Cl.: F16D 48/06

(54) **Verfahren zum Regeln einer Getriebeanordnung, Getriebeanordnung und Fahrzeug**

(30) Priorität: 30.11.2004 DE 102004057952
(71) Anmelder: DEERE & COMPANY, Moline, Illinois 61265-8098 (US)
(72) Erfinder: Reinards, Marco, 54608 Bleialf (DE)
(74) Vertreter: Bradl, Joachim

(57) **Zusammenfassung**

Die vorliegende Erfindung betrifft ein Verfahren zum Regeln einer Getriebeanordnung, mit welcher ein von einem Antriebsaggregat (14) erzeugtes Drehmoment auf eine Antriebsachse (40) eines Fahrzeugs (10) übertragen wird. Die Getriebeanordnung weist ein Lastschaltgetriebe (18) und eine Fahrkupplung (20) auf. Während eines Schaltvorgangs des Lastschaltgetriebes (18) wird bei einem nahezu unveränderten Betriebszustand des Antriebsaggregats (14) die Fahrkupplung (20) zumindest teilweise derart geöffnet, dass hierbei stets ein verbleibendes Drehmoment vom Antriebsaggregat (14) auf die Antriebsachse (40) übertragen wird. Zur kostengünstigen Produktion auch unterschiedlicher Getriebekomponenten ohne langwierige und individuelle Kalibrierungsschritte ist das erfindungsgemäße Verfahren dadurch gekennzeichnet, dass der Schlupfwert der Fahrkupplung (20) derart geregelt wird, dass der durch den Schaltvorgang hervorgerufene Schaltruck minimiert wird.

## Beschreibung

Die vorliegende Erfindung betrifft ein Verfahren zum Regeln einer Getriebeanordnung, mit welcher ein von einem Antriebsaggregat erzeugtes Drehmoment auf eine Antriebsachse eines Fahrzeugs übertragen wird. Die Getriebeanordnung weist ein Lastschaltgetriebe und eine Fahrkupplung auf. Während eines Schaltvorgangs des Lastschaltgetriebes wird bei einem nahezu unveränderten Betriebszustand des Antriebsaggregats die Fahrkupplung zumindest teilweise derart geöffnet, dass hierbei stets ein verbleibendes Drehmoment vom Antriebsaggregat auf die Antriebsachse übertragen wird. Weiterhin betrifft die vorliegende Erfindung eine Getriebeanordnung und ein Fahrzeug.

Eine Getriebeanordnung der genannten Art ist beispielsweise aus der DE 103 24 095 insbesondere für Traktoren bekannt, wobei die DE 103 24 095 vollständig hier einbezogen wird und auf deren gesamten Offenbarungsgehalt hiermit Bezug genommen wird.

Beim Schalten des Lastschaltgetriebes entsteht ein spürbarer Schaltruck, da die die unterschiedlichen Übersetzungen des Lastschaltgetriebes schaltenden Lamellenkupplungen unmoduliert hydraulisch geöffnet bzw. geschlossen werden. Dies führt zu deutlichen Drehmomentschwankungen im Antriebsstrang des Fahrzeugs, was von einem Fahrer des Fahrzeugs als ruckartig und unangenehm empfunden wird und was daher den Fahrkomfort verringert. Bei der DE 103 24 095 wird zur Vermeidung des Schaltrucks vorgeschlagen, die Fahrkupplung in einem gesteuerten Ablauf während des Lastschaltvorgangs gezielt in den Schlupfbereich zu bringen und anschließend wieder gesteuert moduliert zu schließen.

Die Kalibrierung einer Ansteuerung zum Verbringen der Fahrkupplung in den Schlupfbereich ist mit einem ganz erheblichen Aufwand verbunden, der unter Umständen bei der Produktion eines Fahrzeugs und einem damit verbundenen Einbau des Lastschaltgetriebes und der Fahrkupplung für jede Getriebeanordnung eines Fahrzeugs individuell durchgeführt werden muss. Dies kann insbesondere dann erforderlich und aufwendig sein, wenn unterschiedliche Getriebekomponenten - z.B. unterschiedliche Optionen eines Lastschaltgetriebes in Verbindung mit der Fahrkupplung - in einer Fahrzeugbaureihe eingebaut werden.

Die der Erfindung zugrunde liegende Aufgabe wird darin gesehen, ein Verfahren anzugeben und weiterzubilden, durch welches die vorgenannten Probleme überwunden werden. Insbesondere soll eine kostengünstige Produktion auch unterschiedlicher Kombinationen einzelner Getriebekomponenten ohne langwierige und individuelle Kalibrierungsschritte möglich sein. Weiterhin soll eine Getriebeanordnung und ein Fahrzeug angegeben und weitergebildet werden, bei dem die vorgenannten Probleme überwunden werden.

Bezüglich des Verfahrens zum Regeln einer Getriebeanordnung wird die Aufgabe erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Verfahren der eingangs genannten Art dadurch gekennzeichnet, dass der Schlupfwert der Fahrkupplung derart geregelt wird, dass der durch den Schaltvorgang hervorgerufene Schaltruck minimiert wird. Hierzu könnte ein geschlossener Regelkreis verwendet werden.

Hierbei wird in erfindungsgemäßer Weise die Tatsache ausgenützt, dass das von einer Kupplung übertragene Drehmoment von dem Schließdruck abhängig ist, mit dem die Kupplung beaufschlagt wird. Dies ist insbesondere bei einer hydraulisch betätigbaren Kupplung der Fall, die mit relativ geringem Aufwand beispielsweise elektromagnetisch angesteuert werden kann. Somit wird der durch den Schaltvorgang des Lastschaltgetriebes hervorgerufene Schaltstoß durch einen kurzzeitigen Schlupf der Fahrkupplung weitgehend kompensiert, so dass in vorteilhafter Weise der Schaltruck so gut wie nicht auftritt und der Fahrkomfort diesbezüglich verbessert wird. Insbesondere ist hierbei kein Eingriff in die Ansteuerung des Antriebsaggregats erforderlich, so dass damit verbundene Probleme umgangen werden. Auch kann das Lastschaltgetriebe in allen Schaltstufen unter Last geschaltet werden, ohne die Übertragung des Drehmoments vom Antriebsaggregat auf die Antriebsachse vollständig zu unterbrechen. Durch das automatische Einleiten des Öffnungsvorgangs der Fahrkupplung wird eine Fehlbedienung der Getriebeanordnung weitgehend vermieden. Durch das Vorsehen einer Regelung des Schlupfwerts der Fahrkupplung kann in ganz besonders vorteilhafter Weise eine individuelle Kalibrierung der gesamten Getriebeanordnung bei der Produktion des Fahrzeugs entfallen, da bei jedem Lastschaltvorgang individuell eine Regelung des Schlupfwerts der Fahrkupplung durchgeführt wird. Bei dieser Regelung werden stets Ist-Werte mit durch den Regelalgorithmus vorgegebenen Soll-Werten verglichen und der individuell einstellbare Schlupfwert der Fahrkupplung wird entsprechend eingestellt bzw. geregelt.

Das erfindungsgemäße Verfahren könnte die im Folgenden beschriebenen Verfahrensschritte aufweisen.

Grundsätzlich ist vorgesehen, bei einem bedienerausgelösten Lastschaltbefehl die Schlupfregelung zu aktivieren, also nicht unmittelbar aufgrund des bedienerausgelösten Schaltbefehls das Lastschaltgetriebe zu schalten (zeitverzögertes Schalten). Hierbei wird der Schlupf der Fahrkupplung - bevorzugt für eine vorgebbare Zeit - zunächst auf einen vorgebbaren Wert und/oder Schlupfwertverlauf eingestellt. Bei den Schlupfwertverlauf könnte es sich beispielsweise um einen linearen oder quadratischen Funktionsverlauf des Schlupfwerts in Abhängigkeit von der Zeit, ganz allgemein um einen analytisch oder durch eine Abfolge vorgegebener und in einer Steuereinheit abgespeicherter Funktionswerte des Schlupfwerts in Abhängigkeit von der Zeit handeln.

Insbesondere zum Vorbereiten des mechanischen Schaltvorgangs im Lastschaltgetriebe ist vorgesehen, dass nachdem der Schlupf der Fahrkupplung den vorgebbaren Wert eingenommen hat, die Regelung in einen stabilen Zustand verbracht wird. Während dieses stabilen Zustands wird der Schlupfwert der Fahrkupplung im Wesentlichen auf einen konstanten Wert geregelt. Hiermit sollen vor allem Zustände vermieden werden, bei welchen Oszillationen in der Schlupfregelung auftreten, wodurch der beabsichtigte Zweck der Reduzierung des Schaltrucks beim Lastschaltvorgang zunichte gemacht werden könnte.

Gemäß eines ganz besonders bevorzugten Verfahrensschritts ist vorgesehen, dass der Lastschaltvorgang dann durchgeführt wird, wenn der Schlupf der Fahrkupplung den vorgebbaren Wert eingenommen hat. Insoweit hat die Fahrkupplung dann den für den Schaltvorgang des Lastschaltgetriebes idealen Schlupfwert eingenommen, so dass dann die Voraussetzungen vorliegen, um den aufgrund des Schaltvorgangs des Lastschaltgetriebes auftretenden Schaltruck mit Hilfe der schlupfenden Fahrkupplung herauszufiltern bzw. zu unterdrücken.

Alternativ oder zusätzlich könnte vorgesehen sein, dass der Zeitpunkt des Lastschaltvorgangs nach einer vorgebbaren Zeit nach dem bedienerausgelösten Lastschaltbefehl stattfindet. Dies könnte in Abhängigkeit von dem jeweils eingelegten Gang und dem gewünschten Zielgang vorgebbar sein, wobei diese Vorgabewerte in einer Speichereinheit einer Steuereinrichtung abgespeichert werden könnten.

Damit ein sanftes und moduliertes Schließen der Fahrkupplung gewährleistet ist, könnte ab dem Zeitpunkt des Lastschaltvorgangs der Schlupfwert der Fahrkupplung nach einem vorgebbaren - vorzugsweise linearen - Funktionsverlauf verringert werden. Dies könnte auch dadurch erzielt werden, dass ab dem Lastschaltvorgang der Schlupfwert der Fahrkupplung nach einem vorgebbaren - vorzugsweise linearen - Funktionsverlauf nach unten und/oder nach oben begrenzt wird, um letztendlich auch in diesem Verfahrensstadium gegebenenfalls durch den Regelalgorithmus hervorgerufene Oszillationen oder einzelne Drehmomentschwankungsspitzen zumindest weitgehend zu vermeiden.

Weiterhin könnte vorgesehen sein, dass beim Unterschreiten einer vorgebbaren Regelabweichung für den Schlupfwert der Fahrkupplung nach einem vorgebbaren - vorzugsweise linearen - Funktionsverlauf der Schlupfwert der Fahrkupplung in stärkerem Maße als unmittelbar nach dem Lastschaltvorgang verringert wird, gegebenenfalls nach einer zusätzlichen Regelphase. Diese Maßnahme ist insbesondere kurz vor dem völligen Schließen der Fahrkupplung vorgesehen, wenn nämlich bei einer geringen Regelabweichung für den Schlupfwert der Fahrkupplung das Schließen der Fahrkupplung sozusagen vorbereitet ist. Mit Hilfe dieses Verfahrensschritts kann in vorteilhafter Weise die Dauer des gesamten Schaltvorgangs reduziert werden, wenn zum Beispiel die Steigung des linearen Funktionsverlaufs des Schlupfwerts der Fahrkupplung einen - im mathematischen Sinn - "negativeren Wert" aufweist und daher der Schlupfwert schneller sich dem Wert 0 annähert.

Eine Bestimmung eines aktuell vorliegenden Schlupfwerts könnte dadurch erfolgen, dass die Eingangsdrehzahl der Fahrkupplung mit der Ausgangsdrehzahl der Fahrkupplung verglichen wird. Die Eingangsdrehzahl der Fahrkupplung könnte beispielsweise dadurch ermittelt werden, dass aufgrund der Ansteuerdaten des Antriebsaggregats oder eines am Antriebsaggregat vorgesehenen Drehzahlsensors die Drehzahl der Antriebswelle bekannt ist. Wenn die Fahrkupplung dem Antriebsaggregat unmittelbar nachgeordnet ist, ist mit der Drehzahl der Antriebswelle die Eingangsdrehzahl der Fahrkupplung bekannt. Falls die Lastschaltkupplung zwischen dem Antriebsaggregat und der Fahrkupplung angeordnet ist, errechnet sich die Eingangsdrehzahl der Fahrkupplung mit Hilfe der Drehzahl der Antriebswelle und dem Übersetzungsverhältnis des Lastschaltgetriebes bei dem aktuellen eingelegten Gang. Die Ausgangsdrehzahl der Fahrkupplung könnte beispielsweise mit Hilfe eines weiteren Drehzahlsensors ermittelt werden, der entweder an der Ausgangswelle der Fahrkupplung und/oder an einem Antriebsrad des Fahrzeugs angeordnet ist.

In einem ganz besonders bevorzugten Verfahrensschritt wird der vorgebbare Schlupfwert und/oder der vorgebbare Funktionsverlauf zur Verringerung des Schlupfwerts der Fahrkupplung in Abhängigkeit der an der Getriebeanordnung anliegenden Last gewählt. So könnte vorgesehen sein, dass bei einer hohen Last der maximal einzustellende Schlupfwert der Fahrkupplung während eines Schaltvorgangs höher zu wählen ist, als dies bei einer geringen Last der Fall sein könnte.

Bei dem erfindungsgemäßen Verfahren zum Regeln einer Getriebeanordnung könnte zu mindestens einem Zeitpunkt vorgesehen sein, dass der Schlupfwert der Fahrkupplung zumindest zeitweise im Wesentlichen auf einen konstanten Wert geregelt wird. Dies ist beispielsweise unmittelbar nach dem bedienerausgelösten Lastschaltbefehl und dem Einstellen des Schlupfwerts auf einen vorgebbaren Wert vorgesehen.

Neben einer manuellen Betätigung der Fahrkupplung durch den Bediener, insbesondere beim Schalten des Schaltgetriebes, ist die Fahrkupplung elektro-hydraulisch oder magneto-hydraulisch betätigbar. Die Fahrkupplung könnte bevorzugt mit Hilfe eines Proportional-Druckregelventils betätigt werden. Eine manuelle Betätigung der Fahrkupplung eines Fahrzeugs ist üblicherweise über ein Kupplungspedal realisiert und wird vom Fahrer eines in Form eines Traktors ausgebildeten Fahrzeugs beim Schalten des Gruppenschaltgetriebes betätigt. Eine elektro-hydraulische oder magneto-hydraulische Betätigung der Fahrkupplung eines Fahrzeugs ist im Fall eines Traktors zusätzlich zur manuellen Betätigung der Fahrkupplung vorgesehen, um nämlich das erfindungsgemäße teilweise Öffnen der Fahrkupplung während des Schaltvorgangs des Lastschaltgetriebes gezielt regeln zu können.

Nun könnte die Regelstrategie mit einer Steuereinheit berechnet werden. Bevorzugt weist die Steuereinheit einen Speicher auf, in welchem vorgebbare Schlupfwerte, Schlupfwertverläufe und/oder Zeitintervallwerte abgespeichert werden, die für die Regelung des Lastschaltvorgangs vorgegeben oder benötigt werden. Die Steuereinheit könnte beispielsweise in Form einer Computerplatine mit entsprechenden elektronischen Bausteinen bestückt ausgebildet sein.

Ganz besonders bevorzugt ist vorgesehen, dass während des Schaltvorgangs des Lastschaltgetriebes mit der Fahrkupplung ein vorgebbares Mindestdrehmoment übertragen wird, welches beispielsweise 10 bis 40 Prozent des maximal übertragenen Drehmoments betragen könnte. Dieses Mindestdrehmoment könnte in Abhängigkeit des momentanen Zustands der Getriebeanordnung bzw. des Fahrzeugs errechnet werden.

Im Hinblick auf eine Getriebeanordnung für ein Fahrzeug, insbesondere für ein landwirtschaftliches oder industrielles Nutzfahrzeug, wird die eingangs genannte Aufgabe durch die Merkmale des Patentanspruchs 15 gelöst. Hiernach ist eine erfindungsgemäße Getriebeanordnung derart ausgebildet, dass damit das Verfahren nach einem der Ansprüche 1 bis 14 ausführbar ist, so dass zur Vermeidung von Wiederholungen auf den vorangegangenen Teil der Beschreibung verwiesen wird.

Hinsichtlich eines Fahrzeugs, insbesondere eines landwirtschaftlichen oder industriellen Nutzfahrzeugs, wird die eingangs genannte Aufgabe durch die Merkmale des Patentanspruchs 16 gelöst. Hiernach weist ein Fahrzeug eine Getriebeanordnung auf, die mit einem Verfahren nach einem der Ansprüche 1 bis 14 regelbar ist, so dass ebenfalls zur Vermeidung von Wiederholungen auf den vorangegangenen Teil der Beschreibung verwiesen wird.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

### Es zeigt:

- Fig. 1: eine schematische Darstellung eines Ausführungsbeispiels der vorliegenden Erfindung und
- Fig. 2: eine schematische Darstellung eines Diagramms, in dem der elektrische Stromverlauf einer Magnetspule eines Proportionalventils als Funktion der Zeit gezeigt ist.

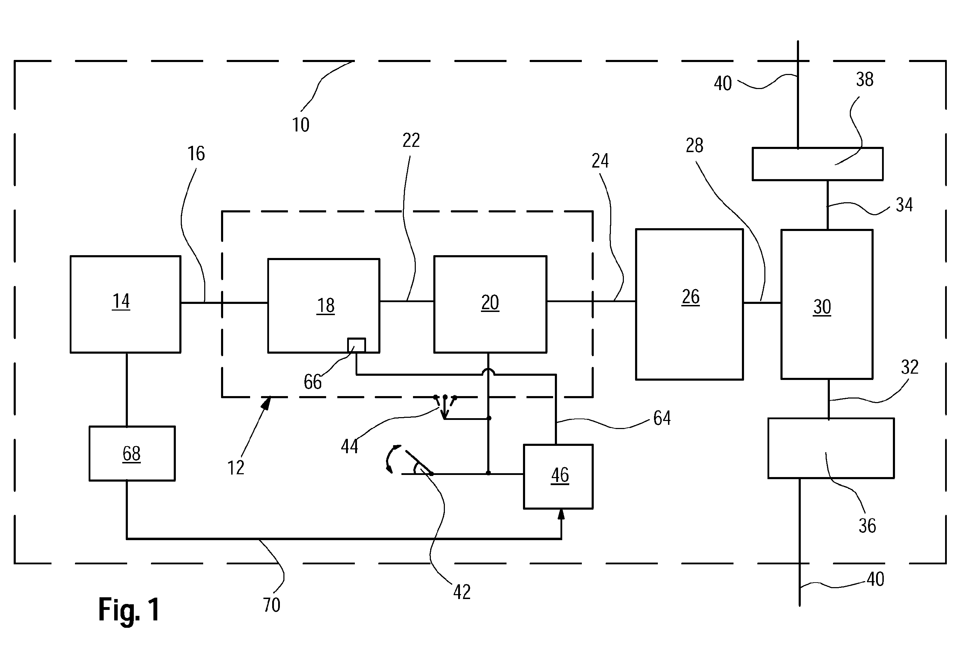

Fig. 1 zeigt ein in Form eines Traktors ausgeführtes Fahrzeug 10 mit einer erfindungsgemäßen Getriebeanordnung 12. Das Fahrzeug wird von einem in Form eines Verbrennungsmotors ausgeführten Antriebsaggregat 14 angetrieben. Über die Welle 16 wird das vom Antriebsaggregat 14 erzeugte Drehmoment zunächst auf die Getriebeanordnung 12 übertragen. Die Getriebeanordnung 12 umfasst ein Lastschaltgetriebe 18 und eine Fahrkupplung 20 mit einem Reversierer, die über die Welle 22 miteinander verbunden sind. Der Getriebeanordnung 12 ist über die Welle 24 ein Schaltgetriebe 26 - ein sogenanntes Gruppenschaltgetriebe - nachgeordnet, mit dem größere Geschwindigkeitsbereiche geschaltet werden können. Das Schaltgetriebe 26 wird während der Betätigung der Fahrkupplung 20 geschaltet und zwar durch manuelle Betätigung eines in Fig. 1 nicht gezeigten Fahrers. Das vom Schaltgetriebe 26 ausgegebene Drehmoment wird über die Welle 28 auf das Differentialgetriebe 30 übertragen, welches das Drehmoment über die Wellen 32, 34 auf die Achsgetriebe 36, 38 überträgt. Die Achsgetriebe 36, 38 geben ihrerseits das Drehmoment auf die Antriebsachse 40 des Fahrzeugs 10 aus.

In Fig. 1 ist lediglich schematisch angedeutet, dass die Fahrkupplung 20 einerseits manuell vom Fahrer mit Hilfe des Kupplungspedals 42 oder mit dem Fahrtrichtungshebel 44 initiiert bzw. betätigt werden kann. Andererseits kann die Fahrkupplung 20 magneto-hydraulisch auf ein entsprechendes Steuersignal der Steuereinrichtung 46 betätigt werden.

Während eines Schaltvorgangs des Lastschaltgetriebes 18 wird bei einem nahezu unveränderten Betriebszustand des Antriebsaggregats 14 die Fahrkupplung 20 zumindest teilweise automatisch geöffnet, wobei hierbei stets ein verbleibendes Drehmoment vom Antriebsaggregat 14 auf die Antriebsachse 40 übertragen wird.

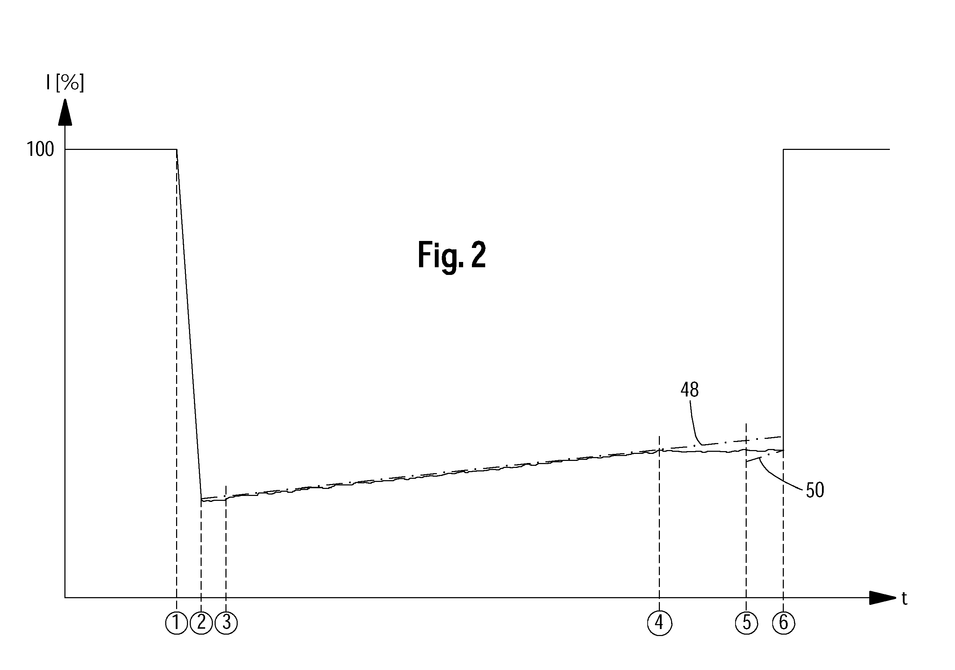

Fig. 2 zeigt schematisch in einem Diagramm den Verlauf des elektrischen Stroms I, mit dem eine Magnetspule eines Proportional-Druckregelventils - nicht gezeigt - beaufschlagt wird, als Funktion der Zeit t. Der Öldruck zum stufenlosen Ausrücken in der Fahrkupplung 20 ist abhängig vom elektrischen Strom I. Der Schlupfwert der Fahrkupplung 20 weist im Prinzip einen an der t-Achse gespiegelten Verlauf auf, wobei der Schlupfwert gleich 0 ist, wenn I=100 ist.

Zum Zeitpunkt t=1 wird der Lastschaltbefehl ausgelöst, und zwar manuell durch das Betätigen eines in den Fig. nicht gezeigten Schalters oder durch eine automatische Schaltfunktion. Daraufhin wird die Schlupfregelung der Fahrkupplung 20 aktiviert und der Öldruck in der Fahrkupplung 20 durch Verringern des elektrischen Stroms I soweit gesenkt, bis die Fahrkupplung 20 mit einem vorgegebenen Wert schlupft. Dieser Betriebspunkt ist im Diagramm gemäß Fig. 2 zum Zeitpunkt t=2 erreicht. Das Zeitintervall t=2 bis t=3 wird genutzt, um einen stabilen Zustand der Regelung zu erreichen und den mechanischen Schaltvorgang im Lastschaltgetriebe 18 durchzuführen. Der tatsächliche Schaltzeitpunkt ist durch eine Zeitkonstante festgelegt. Ein diesbezüglicher, der Steuereinheit 46 zugeordneter Zeitzähler startet zum Zeitpunkt t=1 und somit zeitverzögert zum Schaltbefehl.

Als Folge des Schaltvorganges im Zeitintervall t=2 bis t=3 erhöht sich die Drehzahldifferenz zwischen Fahrkupplungseingangs- und Fahrkupplungsausgangsdrehzahl aufgrund der geänderten Übersetzung und des zu übertragenden Momentes.

Als Folge wird der elektrische Strom I und damit der Öldruck in der Fahrkupplung 20 durch die Regelung wieder erhöht, um die Regeldifferenz zwischen Ist- und Sollschlupf auszugleichen. Der Stromanstieg wird während dieser Phase - Zeitintervall t=3 bis t=4 - durch eine obere Begrenzungsgerade 48 eingeschränkt, um ein sanftes und moduliertes Schließen der Fahrkupplung 20 zu gewährleisten. Die Steigung der Begrenzungsgerade 48 ist fest vorgegeben oder ist abhängig vom zu übertragenden Drehmoment der Fahrkupplung 20, das im Zeitintervall t=2 bis t=3 bestimmt werden kann. Dabei ist vorgesehen, dass je höher das zu übertragende Moment ist, desto größer wird die Steigung der Begrenzungsgeraden 48 gewählt.

Zum Zeitpunkt t=4 erreicht die Regelung den Sollbetriebspunkt, in dem die Regelabweichung eine vorgegebene Schwelle unterschritten hat. Nach einer kurzen Regelphase im Sollbetriebspunkt (Zeitintervall t=4 bis t=5), wird der elektrische Strom I durch eine untere Begrenzungsgerade 50 weiter angehoben. Dadurch wird die Fahrkupplung 20 vollständig geschlossen und damit der durch die Schlupfregelung errechnete Strom-Sollwert überschrieben bzw. überschritten. Im Zeitintervall t=5 bis t=6 erfolgt dieser Schließvorgang. Im Punkt t=6 ist die Fahrkupplung 20 nun komplett geschlossen. Als Folgereaktion wird der elektrische Strom I wieder auf den maximal eingestellten Wert angehoben und der Schaltvorgang ist damit abgeschlossen.

Der in Fig. 2 gezeigte elektrische Stromverlauf - von dem der Schlupfwertverlauf der Fahrkupplung 20 abhängig ist - wird von der in Fig. 1 gezeigten Steuereinheit 46 geregelt. Hierzu wird der Steuereinheit 46 über die Verbindungsleitung 64 der aktuell vorliegende Betriebszustand des Lastschaltgetriebes 18 zugeführt, der von der Steuereinheit 66 des Lastschaltgetriebes 18 ausgegeben wird. Weiterhin wird der aktuell vorliegende Zustand des Antriebsaggregats 14 von dessen Steuereinheit 68 der Steuereinheit 46 der Fahrkupplung 20 über die Verbindungsleitung 70 zugeführt. Insoweit geht bei der Berechnung der Regelstrategie zu einem in Fig. 2 gezeigten elektrischen Stromverlauf bzw. Ventilstromverlauf auch die aktuell vorliegende Auslastung des Antriebsaggregats 14 ein, wodurch sichergestellt wird, dass bei hoher Last am Fahrzeug keine unangenehme Verzögerung des Schaltvorgangs erfolgt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Verfahren zum Regeln einer Getriebeanordnung, mit welcher ein von einem Antriebsaggregat (14) erzeugtes Drehmoment auf eine Antriebsachse (40) eines Fahrzeugs (10) übertragen wird, wobei die Getriebeanordnung ein Lastschaltgetriebe (18) und eine Fahrkupplung (20) aufweist, wobei während eines Schaltvorgangs des Lastschaltgetriebes (18) bei einem nahezu unveränderten Betriebszustand des Antriebsaggregats (14) die Fahrkupplung (20) zumindest teilweise derart geöffnet wird, dass hierbei stets ein verbleibendes Drehmoment vom Antriebsaggregat (14) auf die Antriebsachse (40) übertragen wird, **dadurch gekennzeichnet, dass** der Schlupfwert der Fahrkupplung (20) derart geregelt wird, dass der durch den Schaltvorgang hervorgerufene Schaltruck minimiert wird.

2. Verfahren nach Anspruch 1, **dadurch gekennzeichnet, dass** bei einem bedienerausgelösten Lastschaltbefehl die Schlupfregelung aktiviert wird, wobei der Schlupf der Fahrkupplung (20) zunächst auf einen vorgebbaren Wert und/oder Schlupfwertverlauf eingestellt wird.

3. Verfahren nach Anspruch 2, **dadurch gekennzeichnet, dass** nachdem der Schlupf der Fahrkupplung (20) den vorgebbaren Wert eingenommen hat, die Regelung in einen stabilen Zustand verbracht wird, in welchem der Schlupfwert der Fahrkupplung (20) im Wesentlichen auf einen konstanten Wert geregelt wird.

4. Verfahren nach einem der Ansprüche 1 bis 3, **dadurch gekennzeichnet, dass** der Lastschaltvorgang dann durchgeführt wird, wenn der Schlupf der Fahrkupplung (20) den vorgebbaren Wert eingenommen hat.

5. Verfahren nach einem der Ansprüche 1 bis 4, **dadurch gekennzeichnet, dass** der Zeitpunkt des Lastschaltvorgangs nach einer vorgebbaren Zeit nach dem bedienerausgelösten Lastschaltbefehl stattfindet.

6. Verfahren nach Anspruch 4 oder 5, **dadurch gekennzeichnet, dass** ab dem Zeitpunkt des Lastschaltvorgangs der Schlupfwert der Fahrkupplung (20) nach einem vorgebbaren - vorzugsweise linearen - Funktionsverlauf verringert wird.

7. Verfahren nach einem der Ansprüche 4 bis 6, **dadurch gekennzeichnet, dass** ab dem Lastschaltvorgang der Schlupfwert der Fahrkupplung (20) nach einem vorgebbaren - vorzugsweise linearen - Funktionsverlauf nach unten und/oder nach oben begrenzt wird.

8. Verfahren nach einem der Ansprüche 1 bis 7, **dadurch gekennzeichnet, dass** beim Unterschreiten einer vorgebbaren Regelabweichung für den Schlupfwert der Fahrkupplung (20) nach einem vorgebbaren - vorzugsweise linearen - Funktionsverlauf der Schlupfwert der Fahrkupplung (20) in stärkerem Maße als unmittelbar nach dem Lastschaltvorgang verringert wird, gegebenenfalls nach einer zusätzlichen Regelphase.

9. Verfahren nach einem der Ansprüche 1 bis 8, **dadurch gekennzeichnet, dass** eine Bestimmung eines aktuell vorliegenden Schlupfwerts **dadurch** erfolgt, dass die Eingangsdrehzahl der Fahrkupplung (20) mit der Ausgangsdrehzahl der Fahrkupplung (20) verglichen wird.

10. Verfahren nach einem der Ansprüche 1 bis 9, **dadurch gekennzeichnet, dass** der vorgebbare Schlupfwert und/oder der vorgebbare Funktionsverlauf zur Verringerung des Schlupfwerts der Fahrkupplung (20) in Abhängigkeit der an der Getriebeanordnung anliegenden Last gewählt wird.

11. Verfahren nach einem der Ansprüche 1 bis 10, **dadurch gekennzeichnet, dass** der Schlupfwert der Fahrkupplung (20) zumindest zeitweise im Wesentlichen auf einen konstanten Wert geregelt wird.

12. Verfahren nach einem der Ansprüche 1 bis 11, **dadurch gekennzeichnet, dass** die Fahrkupplung (20) manuell, elektro-hydraulisch oder magneto-hydraulisch betätigbar ist und insbesondere mit Hilfe eines Proportional-Druckregelventils (84) betätigt wird.

13. Verfahren nach einem der Ansprüche 1 bis 12, **dadurch gekennzeichnet, dass** die Regelstrategie mit einer Steuereinheit (46) berechnet wird.

14. Verfahren nach einem der Ansprüche 1 bis 13, **dadurch gekennzeichnet, dass** während des Schaltvorgangs des Lastschaltgetriebes (18) mit der Fahrkupplung (20) ein vorgebbares Mindestdrehmoment übertragen wird.

15. Getriebeanordnung für ein Fahrzeug, insbesondere für ein landwirtschaftliches oder industrielles Nutzfahrzeug, zur Ausführung des Verfahrens nach einem der Ansprüche 1 bis 14.

16. Fahrzeug, insbesondere ein landwirtschaftliches oder industrielles Nutzfahrzeug, mit einer Getriebeanordnung, **dadurch gekennzeichnet, dass** die Getriebeanordnung (12) mit einem Verfahren nach einem der Ansprüche 1 bis 14 regelbar ist.
